# EUROPEAN PATENT SPECIFICATION

(11) **EP 4 148 484 B1**
(45) Date of publication and mention of the grant of the patent: **17.12.2025**
(21) Application number: 21195513.3
(22) Date of filing: 08.09.2021
(51) Int. Cl.: G02B 27/02

(54) **IMAGING APPARATUS WITH AXIAL FOCAL DISTANCE ATHERMALIZATION**
ABBILDUNGSVORRICHTUNG MIT AXIALER BRENNWEITENATHERMALISIERUNG
APPAREIL D'IMAGERIE AVEC ATHERMALISATION DE LA DISTANCE FOCALE AXIALE

(43) Date of publication of application: 15.03.2023
(73) Proprietor: Robert Bosch GmbH, 70442 Stuttgart (DE)
(72) Inventor: UNAL, Ugur, NL-5508PX Veldhoven (NL); SPARIDAENS, Freek, NL-5613EM Eindhoven (NL); ACAR, Yilmaz, NL-5629PAI Endhoven (NL)

(56) References cited:
- DE-A1- 10 261 973
- US-A1- 2016 202 443

## Description

### State of the art

The invention concerns an imaging apparatus in accordance with the preamble of claim 1.

Imaging optical systems usually comprise various components like a sensor, optics or a supporting structure. Optics of the imaging optical system may consist of a single lens or a mirror. In practice, the optics consist of combination of different components and thus form a multi-component optical system. In the multi-component optical system the components consist of different materials. In order to make a connection between optics and other components of the imaging optical system, a means of fixation is needed. Mechanical hardware (retainers) and/or adhesives belong to the most common means of fixation.

The document EP 1 668 891 B1, which seems to be the closest state of the art, proposes a camera arrangement and a method for producing a camera arrangement. The camera arrangement comprises an image sensor, an optics unit, a housing and fastening means for fixing the image sensor relative to the housing, the housing having alignment means on the inside that enable the main axis of the image sensor and the main axis of the optics unit to be aligned axially with respect to one another.

The document US 2016/0202443 A1 discloses an imaging apparatus with a compensation unit arranged between the housing and the optical arrangment, for compensation of thermal expansion of the housing to keep optical focus on the image sensor.

The document DE 000010261973 A1 discloses an imaging apparatus with a compensation unit arranged between the housing and the optical arrangement, for compensation of thermal expansion of the housing to keep optical focus on the image sensor. In another embodiment it discloses an athermal mounting of an image sensor in the way, that the optical arrangement is mounted without the compensation unit directly to the housing and moves with the thermal expansion. The image sensor has the compensation unit which moves the image sensor to keep it in optical focus.

### Disclosure of the invention

Subject-matter of the present invention is an imaging apparatus with the features of claim 1. Preferred and/or advantageous embodiments of the invention result from the subclaims, the following description and/or the attached figures.

The invention relates to an imaging apparatus, in particular to a precision imaging system, especially requiring sub-pixel stability. The imaging apparatus is configured to create visual representation for example of an indoor and/or exterior area. Preferably, the image apparatus is configured to photograph and/or to record an image or a series of images of a scene in the indoor and/or exterior area. The image apparatus is designed to photograph and/or to record a stationary and/or mobile items or a living object, e.g., a human being or a pet. Optional the image apparatus is configured to create visual representation of the interior of a human body for clinical analysis and medical intervention and/or visual representation of the function of some organs or tissues. Preferably, the imaging apparatus is used for one of the following: digital camera, camera modules, camera phones, optical devices, medical imaging equipment and night vision equipment such as thermal imaging devices.

The imaging apparatus comprises a housing. The housing is preferably configured to protect the imaging apparatus against mechanical damages, especially against the mechanical damages of inner workings of the imaging apparatus. The housing, in particular the casing provides for stability of the imaging apparatus.

Furthermore, the imaging apparatus comprises an imaging sensor. The imaging sensor is designed as an electronic device. The imaging sensor is configured to detect and/or to convey information used to make a digital image. In particular, the imaging sensor is configured to convert a light comprising an optical image received on the imaging apparatus or an imaging apparatus lens into the digital image. The imaging sensor is used in electronic imaging devices of both analog and digital types. The imaging sensor preferably comprises a sensor element. The sensor element may for example be realized as a CCD or CMOS or a PSD element. It may be realized as a line sensor element or - preferred - as a matrix element. The imaging sensor is arranged in the housing.

The imaging apparatus furthermore comprises an optical arrangement for projecting an image onto the imaging sensor, especially the sensor element, in an image plane. The image is projected onto the imaging sensor in an axial focal distance between the optical arrangement and the imaging sensor in the image plane. The focal distance is determined by the optical arrangement. The optical arrangement is configured as a lens system, in particular an objective. Preferably the optical arrangement comprises at least one of the following: a lens, a mirror, a prism and/or a casing. Preferably, the optical arrangement gathers light from an object at which it is aimed. Specifically, the optical arrangement focuses the light, in particular a light ray to produce the image and/or a series of images in the focal plane at the axial focal distance.

The imaging apparatus comprising a compensation unit to athermalize the axial position of the image plane. Athermalization is preferably defined by the ability to keep the image plane in a constant axial position, also during temperature changes. Preferably, mechanical and/or optical focal shifts are compensated by the compensation unit.

According to the invention it is proposed that the compensation unit is arranged between the housing and the optical arrangement. It is especially preferred, that the compensation unit is arranged in a serial manner between the housing and the optical arrangement and/or being a connecting component in a mechanical chain between the housing and the optical arrangement.

It is one finding of the invention, that due to different materials in imaging apparatus, often anisotropic expansions and contractions occur in view of the axial focal/image plane position. In case temperatures increase the structures expand and in most cases the image plane position will lift off the imaging sensor. In case temperatures decrease, the structures contract and in most cases the position of the image plane will migrate into or behind the imaging sensor. In order to prevent the unwanted focal shift and/or position shift of the image plane due to temperature changes, it is proposed, to use the compensation unit between the housing and the optical arrangement. The compensation unit is adapted to athermalize the axial distance of the optical arrangement to the imaging sensor. The athermalization is understood as a process of achieving optothermal stability. In particular, the athermalization is a process of ensuring that optical properties, especially the position of the image plane, of the imaging apparatus do not change with a variation in temperature.

Preferably, the imaging optical system comprises a first axial direction of thermal expansion of the housing and a second axial direction of thermal expansion of the compensation unit. Preferably, the first axial direction runs in an opposite direction to the second axial direction. For instance, if the first axial direction of thermal expansion of the housing expands outwards, the second axial direction of thermal expansion of the compensation unit expands inwards and/or runs in reverse direction. As a result, the resulting overall change of the axial position of the image plane is minimized or at least reduced.

Alternatively, the imaging optical system comprises the second axial direction of thermal contraction of the housing and the first axial direction of thermal contraction of the compensation unit. For instance, if the second axial direction of thermal contraction of the housing retracts inwards, the first axial direction of thermal contraction of the compensation unit retracts outwards and/or runs in reverse direction. As a result, the resulting overall change of the axial distance is minimized or at least reduced. As a result, the resulting overall change of the axial position of the image plane is minimized or at least reduced.

Preferably, the base material of the housing and/or the housing comprises a lower coefficient of thermal expansion (CTE) than the base material of the compensation unit and/or the compensation unit. Specifically, the base material of the housing and the base material of the compensation unit are preselected, based on their coefficient of thermal expansion. In particular, the CTE of both the base materials and the components is preselected in order to compensate for each other's expansion and/or contraction. This embodiment of the invention is based on the idea of using a thermal expansion compensating structure, inter alia, as the compensation unit and the housing to eliminate relative movement causing focal shift or defocus between the optical arrangement and the imaging sensor, especially the sensor element. It is assumed, that in this preferred embodiment an effective length of the housing is longer than an effective length of the compensation unit both contributing to the expansion and/or contraction in axial direction, respectively. In case the effective length of the housing is shorter than the effective length of the compensation unit, it is preferred that the base material of the housing or the housing itself comprises a higher coefficient of thermal expansion (CTE) than the base material of the compensation unit or the compensation unit itself.

In a preferred mechanical realization, the housing comprises a housing tubular section extending in the first axial direction and the compensation unit comprises a compensation tubular section extending in the second axial direction and/or opposite direction of the housing tubular section and being connected with an outer and to the outer end of the housing tubular section. The tubular sections may comprise a closed surface or may be realised with openings or breakthroughs in the surface. It is further preferred, that the optical arrangement is coupled directly or indirectly to the inner end of the compensation tubular section. By using tubular sections, only axial expansions and/or contractions occur, which can be mechanically compensated by the opposite orientations of the tubular sections.

The imaging apparatus comprises a carrier glass, which is fixed to the housing. The carrier glass is configured to protect the inner workings of the imaging apparatus. In particular, the carrier glass provides a transparent protection to the inner working of the imaging apparatus. Preferably, the carrier glass is configured to let the light enter and/or reach the inner workings of the imaging apparatus, e.g., the imaging sensor. According to an advantageous embodiment of the invention, the carrier glass is configured as a mechanical interface for the imaging sensor. The carrier glass contains an outer lateral surface. Preferably, the carrier glass is made of a plain window or an optical filter glass. The imaging sensor is attached directly to the carrier glass. Especially the imaging sensor is held by the carrier glass and thus indirectly by the housing. Fixing the imaging sensor directly to the carrier glass and thus indirectly to the housing, results in an athermal mounting of the imaging sensor relative to the housing and reduces stress and/or displacements in a radial direction resulting from further components between the imaging sensor and the housing.

The imaging sensor comprises an isolation glass. The isolation glass protects the sensor element of the imaging sensor. The isolation glass of the imaging sensor is bonded directly to the carrier glass, whereby the carrier glass is used as the mechanical interface for the imaging sensor. Preferably the imaging sensor is exclusively attached to the carrier glass through the isolation glass and/or the connection between the carrier glass and the isolation glass is the only connection of the imaging sensor to the carrier glass. Preferably, the isolation glass of the imaging sensor and the carrier glass consist of a similar and/or the same isotropic material. Alternatively, both the isolation glass of the imaging sensor and the carrier glass have a similar and/or the same coefficient of thermal expansion (CTE). Since both the sensor isolation glass and the carrier glass are made from same and/or similar isotropic materials, misalignment due to relative displacement and stresses based on temperature changes would not occur or be significantly reduced. Thus, this aspect's function is to eliminate stresses and/or displacements on image sensor caused by uneven thermal expansion of different materials used to construct an imaging sensor block. In particular, the isolation glass and the carrier glass are inseparably bonded over its entire surface. Especially the isolation glass and the carrier glass are cohesively bonded.

It is further preferred, that the isolation glass and the carrier glass are both round, especially circular. By using round especially circular shapes for the glasses, the thermal expansion in all radial directions is identical or at least similar. Preferably, the glasses are coaxially arranged for further enhancing the isotropic properties of the mounting of the imaging sensor.

Preferably, the imaging sensor, especially the isolation glass, is attached by an optical, especially optical clear adhesive to the carrier glass. The optical adhesive is configured to inseparable glue and/or bond both the imaging sensor, especially the isolation glass, and the carrier glass. The isolation glass is bonded to the carrier glass preferably over its entire surface by the optical adhesive. In particular, the optical adhesive consists of a transparent and/or translucent material. Preferably, the optical adhesive allows a light to pass through. In particular, the optical adhesive is configured to allow the objects to be captured by the imaging device and/or to be clearly seen through it.

In one embodiment of the present invention, the carrier glass is attached to the housing by a mechanical adhesive. In particular, the carrier glass is inseparably attached to the housing of the imaging apparatus by the mechanical adhesive. Preferably, the mechanical adhesive comprises elastic properties. Optionally, the adhesive can change its volume due to a change of temperature. By attaching the carrier glass to the housing by the mechanical adhesive, mechanical stresses and/or tensions induced into the carrier glass in radial direction can be reduced. Preferably, the mechanical adhesive is the mechanical interface, especially the only mechanical interface between the carrier glass and the housing, so that the carrier glass is adhesive-held and/or elastic-held.

Preferably, the mechanical adhesive is arranged at the outer lateral surface and/or outer circumference of the carrier glass. The mechanical adhesive is arranged in a circumferential direction of the carrier glass. In particular, the mechanical adhesive is applied peripheral between the housing of the imaging apparatus and the carrier glass. The mechanical adhesive is configured as an attachment between the carrier glass and the housing. In particular, the mechanical adhesive is configured to bridge an annular gap between the carrier glass and the housing. The advantage of this embodiment is that thermal expansions in radial direction are compensated in an isotropic manner by the mechanical adhesive.

Preferably, the imaging apparatus comprises a carrying structure, whereby the carrying structure is mechanically coupled to the housing. In a preferred embodiment of the invention, the imaging sensor is mechanically decoupled from the carrying structure. In Particular, the carrying structure is configured as a structural element. The carrying structure is designed to carry the housing of the imaging apparatus. Optionally, the carrying structure is designed as a support for further inner workings of the imaging apparatus, whereby the inner workings are configured as a mechanism that functions internally to imaging apparatus and is not outwardly visible. Preferably, the carrying structure is composed of the same material as the housing of the imaging apparatus. For instance, the carrying structure is configured as a mounting interface of the imaging apparatus. By coupling the carrying structure to the housing and decoupling the carrying structure from the imaging sensor, the connection between the imaging sensor and the carrier glass is the only mechanical interface for carrying the imaging sensor. As this only mechanical interface of the imaging sensor is athermal, the imaging sensor is athermal mounted in the housing.

Preferably the imaging apparatus comprises a printed circuit board (PCB), wherein the imaging sensor is electrically connected to the PCB. In particular, the PCB is mechanically decoupled from the housing. The printed circuit board consists for example of a non-conductive substrate and at least one conductive track. The PCB may electrically connect the imaging sensor with further electrical or electronic components of the imaging apparatus using the conductive tracks, pads and/or other features etched from one or more sheet layers of copper laminated onto and/or between sheet layers of the non-conductive substrate. Particularly, the PCB consists of anisotropic material. Due to temperature changes relative to initial temperature, the anisotropic materials change their size and show different behavior in different directions. In particular, the printed circuit board is only used as a carrier and/or mechanical support for the imaging sensor, but is mechanically decoupled from the housing. The printed circuit board only serves as an interface for electrical connections, but is an open and/or unconnected end of the mechanical mounting of the imaging sensor.

It is especially preferred that the printed circuit board is mechanical decoupled from the carrying structure. The printed circuit board may be electrically connected by a cable or another connecting element to the carrying structure, which does not transfer mechanical movements, tensions, displacements or stresses.

In a further preferred embodiment, the optical arrangement is realized as a mounting unit and provides an own temperature dependent axial focal shift. Thus, the optical arrangement changes the actual image position with temperature changes. The compensation unit is adapted to compensate said axial focal shift. The axial focus shift is dependent on the inner structure and/or outer structure and/or the axial position of the mechanical interface of the optical arrangement. It is possible to select the axial position of the mechanical interface so that the optical arrangement produces no focal shift, a positive focal shift or a negative focal shift during temperature changes. It is preferred, that the compensation unit is designed, so that any focal shift is compensated.

In a preferred embodiment the mechanical and optical setup is designed, so that a chain of components, including the optical arrangement, the compensation unit, the housing and the imaging sensor fulfills a constant position condition in a temperature range between - 10°C and 45 °C, whereby it is preferred, that the axial position change is less than 0,1%, preferably less than 0,01% of the focal length of the optical arrangement. Alternatively or additionally, the axial position change is less than 0,1% of the distance of the optical arrangement to the imaging sensor.
- Figure 1a: a sectional view of an imaging apparatus as a first embodiment of the invention;
- Figure 1b: a schematic illustration of the functioning of the compensation unit in Figure 1a during a temperature change;
- Figure 2a: a sectional view of an imaging apparatus as a first embodiment of the invention;
- Figure 2b: a schematic illustration of the functioning of the compensation unit in Figure 2a during a temperature change;
- Figure 3a: a sectional view of an imaging apparatus as a first embodiment of the invention;
- Figure 3b: a schematic illustration of the functioning of the compensation unit in Figure 3a during a temperature change.

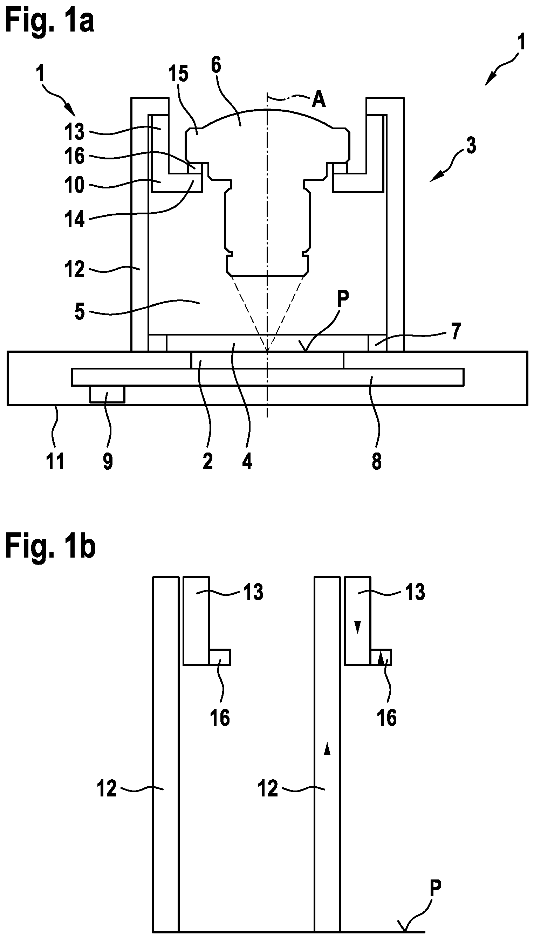

Figure 1a shows a schematic representation of an imaging apparatus 1 as an embodiment of the invention. The imaging apparatus 1 can be especially part of a camera for any application. Preferably, the imaging apparatus 1 is used in high quality applications, which need subpixel accuracy. The imaging apparatus 1 comprises an imaging sensor 2 for capturing images. The special construction of the imaging apparatus 1 allows to eliminate stresses and/or displacements on the imaging sensor 2 caused by uneven thermal expansion of different materials used to construct the imaging apparatus 1.

The imaging apparatus 1 comprises a housing 3, whereby the imaging sensor 2 is arranged in the housing 3. The housing 3 is placed on a carrying structure 11, which can be realised as a hard and especially athermal body. The imaging apparatus 1 comprises a carrier glass 4, whereby the carrier glass 4 is fixed to the housing 3. The housing 3 has an opening 5 for receiving optical signals of the object to be captured. The carrier glass 4 closes the opening 5 in order to protect the inner parts of the imaging apparatus 1 against external influences, for example dirt or mechanical impacts. An optics as an optical arrangement 6 is placed on the housing 3 in order to realise an optical imaging from the object onto the imaging sensor 2 in an image plane P.

In this embodiment, the imaging sensor 2 is attached directly to the carrier glass 4. Especially the imaging sensor 2 contacts the carrier glass 4, whereby between the imaging sensor 2 and the carrier glass 4 optical adhesive is arranged in order to connect the imaging sensor 2 and the carrier glass 4. The imaging sensor 2 is mechanically decoupled from the carrying structure 11, so that with this method, stresses originating from fixation of the imaging sensor 2 to the housing 3 are eliminated.

More precisely, the imaging sensor 2 comprises an isolation glass and a sensor element, which is placed in optical direction under the isolation glass in order to protect the sensor element. The imaging sensor 2 may further comprise a sensor casing, which houses the sensor element and which is closed by the isolation glass. The sensor element is for example a CCD- or CMOS- matrix-element. The sensor casing may be made of ceramic or another athermal material. In order to minimise displacements, stresses and tensions resulting from temperature changes, only the isolation glass is glued to the carrier glass 4 by the optical adhesive. The sensor casing is not connected to the carrier glass 4, so that the contact area between imaging sensor 2 and carrier glass 4 is realised as a glass-to-glass contact area.

In case temperature changes occur, the displacement of the imaging sensor 2 relative to the carrier glass 4 is minimised as all resulting stresses and tensions are symmetrically distributed around an optical and/or mechanical axis A of the glasses. Consequently, the image position on the imaging sensor 2 and thus on the sensor element is kept constant with respect to the radial direction to the optical and/or mechanical axis A of the glass 4. In other embodiments, the isolation glass is rectangular. In this case, the circular shaped carrier glass 4 reduces at least the displacements in radial direction.

From figure 1a it can be seen, that the carrier glass 4 is fixed to the housing 3 by a mechanical adhesive 7. The mechanical adhesive 7 is arranged in a circular ring between the carrier glass 4 and the housing 3. The mechanical adhesive 7 is arranged at the outer lateral surface and/or outer circumference of the carrier glass 4. In axial direction, no mechanical adhesive 7 is arranged between the carrier glass 4 and the housing 3. In case of temperature changes, the carrier glass 4 may expand in radical direction, which will be received and compensated by the mechanical adhesive 7, which is made from an elastic material. As the temperature expansion (or contraction) due to temperature changes is symmetrically distributed around the optical and/or mechanical axis A, no displacements, stresses and tensions are introduced into the carrier glass 4, so that using the mechanical adhesive 7 to fix the carrier glass 4 to the housing 3 further enhances the temperature stability of the optical apparatus 1 concerning the image position on the sensor element with respect to the radial direction to the optical and/or mechanical axis A of the glass 4.

The imaging apparatus 1 further comprises a printed circuit board 8, whereby the imaging sensor 2 is placed onto the printed circuit board 8. Especially, the imaging sensor 2 is mechanically coupled to the printed circuit board 8. Printed circuit boards in general are known as being anisotropic in view of temperature changes. In order to eliminate displacements, stresses and tensions resulting from the anisotropic behavior of the printed circuit board 8, the printed circuit board 8 is mechanically decoupled from the carrying structure 11 by a mechanical decoupling element 9. The mechanical decoupling element 9 can for example be realized as a loose cable, which is not able to transmit forces. Other embodiments of the decoupling element 9 are possible, for example mechanical construction which allows a relative movement between the printed circuit board 8 and the carrier structure 11 while transferring electrical signals from the printed circuit board 8 to the carrying structure 11. Summarized, the printed circuit board 8 is mechanically connected to the imaging sensor 2 and is mechanically decoupled from the carrying structure 11 and thus from the housing 3. Consequently, displacements, stresses and tensions resulting from the movement of the printed circuit board 8 are not transferred to the housing 3 or influence the position of the imaging sensor 2 so that the sensor element is kept constant with respect to the radial direction to the optical and/or mechanical axis A of the glass 4.

The housing 3 and the optical arrangement 6 are not directly coupled with each other. Between the housing 3 and the optical arrangement 6 a compensations unit 10 is placed, which is an intermediate component in a chain comprising the housing 3 and the optical arrangement 6. The housing 3 comprises a housing tubular section 12 which extends in an outward direction of the imaging apparatus 1. The housing tubular section 12 is coaxial to the optical and/or mechanical axis A of the imaging apparatus 1. The compensation unit 10 comprises a compensation tubular section 13, which is connected with the housing tubular section 12 at an outer end and which extends in an inward direction of the imaging apparatus 1. The compensation tubular section 13 is coaxial to the optical and/or mechanical axis A of the imaging 1 and/or coaxial and/or concentric to the housing tubular section 12. At an inner end, the compensation tubular section 13 is connected with the optical arrangement 6. More precisely, the compensation unit 10 comprises a ring section 14, which is placed in a radial plane in view of the axis A, whereby the optical arrangement 6 rests with a flange section 15 on the ring section 14. Between the flange section 16 and the ring section 14 an optional adhesive ring 16 is arranged.

Figure 1b shows on the left side a cross-section of one wall of the housing tubular section 12 and a cross-section of one wall of the compensation tubular section 13 both having a first temperature. On the right side of figure 1 b, the same arrangement is shown having a second temperature, which is higher than the first temperature. With increasing temperature, the housing tubular section 12 expands in a first axial direction outboards from the carrying structure 11. As the tubular sections 12, 13 are connected with each other at the outer end, the compensation tubular section 13 expands in a second axial direction, which runs in an opposite direction to the first direction. As the ring section 14 rests on the flanged section 16, it expands in the first direction.

It is the underlying idea to select the dimensions of the tubular sections 12, 13, the adhesive ring 16 as well as further influencing components and furthermore to select the CTE-values (coefficient of thermal expansion) of those components, so that the overall axial displacement of the optical arrangement 6 is kept constant or at least nearly constant. As a result the position of the image plane P of the optical arrangement 6 is kept constant in view of the axial position.

As the length of the housing tubular section 12 is longer than the length of the compensation tubular section 13, the CTE of the base material of the housing tubular section 12 or the CTE of the component in its entirety is lower than the respective CTE-value of the compensation tubular section 13. It is furthermore preferred, that also adhesive ring 16 has a respective CTE-value, which is lower than the CTE-value of the compensation tubular section 13.

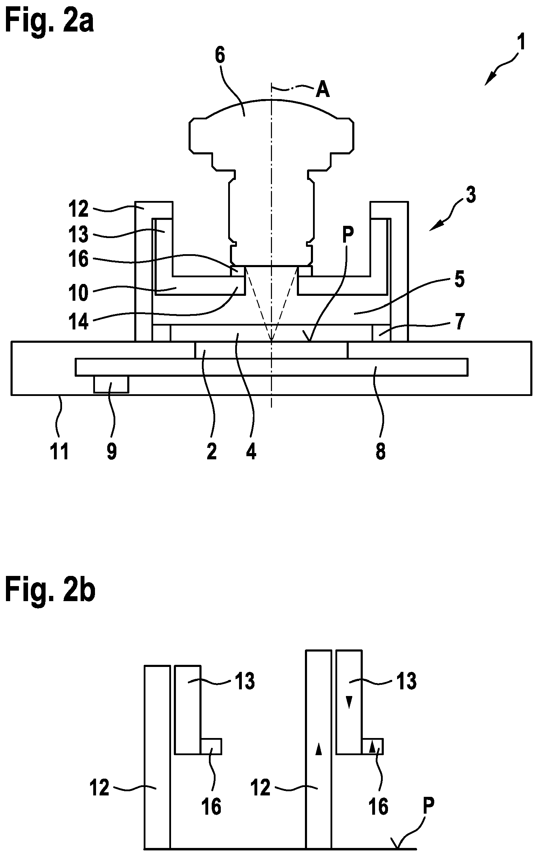

Figures 2 a, b show a similar setup compared to the figures 1a, b, whereby the optical arrangement 6 is mounted on the compensation unit 10 at its lower end, so that the optical arrangement 6 is referenced to the exit aperture. The optical arrangement 6 in the figures 1a, 2a are assumed as being athermal optics, having no focus shift during temperature changes.

In some cases, the optical arrangement 6 may have a certain focus change with temperature, either increasing or decreasing back focal distance with increasing temperature. Here the change in back focal length can be interpreted as CTE of optical arrangement 6, and the housing 3 and the compensation unit 10 can be structured to cancel it. In this case, the optical arrangement 6 is a further component of the imaging apparatus 1, which can be compensated by the selection of dimensions and CTE.

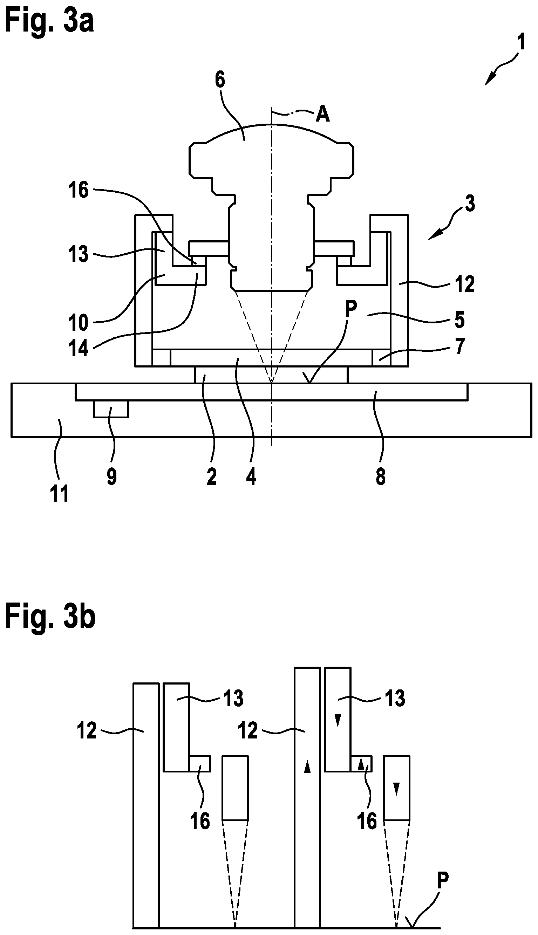

Figures 3a, b show a further embodiment of the invention, whereby the optical arrangement 6 is flanged in a middle section and whereby the optical arrangement 6 is realised as a negative CTE-optics, which retracts the image plane with increasing temperature.

From figure 3b, it can be derived, that the negative shift of the image plane due to the increasing temperature of the optical arrangement 6 can be compensated by the mechanical setup of the tubular sections 12, 13, optionally the adhesive ring 16 and the position of the mechanical interface of the optical arrangement 6.

The method described in this invention provides a way to construct a precision, especially sub-pixel up to 3 dimensionally stable optical imaging 1 system within a specific temperature range. Optionally, radially athermalizing the sensor plane in combination to axial athermalization, thus 3 dimensional athermalization, is a possible benefit of the invention.

## Claims

1. Imaging apparatus (1), comprising:
a housing (3),
an imaging sensor (2), whereby the imaging sensor (2) is arranged in the housing (3),
an optical arrangement (6) for projecting an image onto the imaging sensor (2) in an image plane (P), whereby the optical arrangement (6) is coupled to the housing (3),
a compensation unit (10) to athermalize the axial position of the image plane (P),
wherein the compensation unit (10) is arranged between the housing (3) and the optical arrangement (6),
**characterized in that** the imaging apparatus (1) comprising a carrier glass (4),
whereby the carrier glass (4) is fixed to the housing (3) and
whereby the imaging sensor (2) is attached directly to the carrier glass (4),
wherein the imaging apparatus (1) comprising a carrying structure (11),
whereby the carrying structure (11) is mechanically coupled to the housing (3),
whereby the imaging sensor (2) is mechanically decoupled from the carrying structure (11).

2. Imaging apparatus (1) according to claim 1, **characterised by** a first axial direction of thermal expansion of the housing (3) and a second axial direction of thermal expansion of the compensation unit (10), wherein the first axial direction runs in an opposite direction to the second axial direction, so that the thermal expansion of the housing (3) in the first axial direction is compensated by the thermal expansion of the compensation unit (10) in the second axial direction,
and/or
**characterised by** the second axial direction of thermal contraction of the housing (3) and the first axial direction of thermal contraction of the compensation unit (10), wherein the second axial direction runs in an opposite direction to the first axial direction, so that the thermal contraction of the housing (3) in the second axial direction is compensated by the thermal contraction of the compensation unit (10) in the first axial direction.

3. Imaging apparatus (1) according to claim 1 or 2, **characterised in that** a base material of the housing (3) comprises a lower coefficient of thermal expansion (CTE) than the base material of the compensation unit (10).

4. Imaging apparatus (1) according to one of the preceding claims, **characterized in, that** the housing (3) comprises a housing tubular section (12) extending in the first axial direction and the compensation unit (10) comprises a compensation tubular section (13) being fixed with an outer end to the outer end of the housing tubular section and extending in the second axial direction.

5. Imaging apparatus (1) according to claim 4, **characterized in, that** the optical arrangement (6) is coupled to the inner end of the compensation tubular section (13).

6. Imaging apparatus (1) according to one of the previous claims, **characterized in that** the carrier glass (4) is radially attached to the housing (3) by a mechanical adhesive (7).

7. Imaging apparatus (1) according to one of the preceding claims, **characterized in that** the optical arrangement (6) comprises a temperature dependent axial focal shift, so that the optical arrangement (6) changes the axial image position with temperature, whereby the compensation unit (10) is adapted to compensate the axial focal shift.

8. Imaging apparatus (1) according to one of the previous claims, comprising a chain of components comprising the optical arrangement (6), the compensation unit (10), the housing (3) and the imaging sensor (2), wherein the chain and/or the compensation unit is adapted so that the axial image position fulfils a constant position condition in a temperature range between - 10 °C and +45°C.

9. Imaging apparatus (1) according to claim 8, **characterized in that** constant position condition is defined that the axial position change is less than 0,1% of the focal length of the optical arrangement (6) and/or less than 0,1% of the distance of the optical arrangement (6) to the imaging sensor (2).

## Patentansprüche

1. Abbildungsvorrichtung (1), umfassend:
ein Gehäuse (3),
einen Bildgebungssensor (2), wobei der Bildgebungssensor (2) in dem Gehäuse (3) angeordnet ist,
eine optische Anordnung (6) zum Projizieren eines Bildes auf den Bildgebungssensor (2) in einer Bildebene (P), wobei die optische Anordnung (6) mit dem Gehäuse (3) gekoppelt ist,
eine Kompensationseinheit (10) zum Athermalisieren der axialen Position der Bildebene (P), wobei die Kompensationseinheit (10) zwischen dem Gehäuse (3) und der optischen Anordnung (6) angeordnet ist,
**dadurch gekennzeichnet, dass** die Abbildungsvorrichtung (1) ein Trägerglas (4) umfasst,
wobei das Trägerglas (4) am Gehäuse (3) befestigt ist und
wobei der Bildgebungssensor (2) direkt am Trägerglas (4) befestigt ist,
wobei die Abbildungsvorrichtung (1) eine Tragstruktur (11) umfasst,
wobei die Tragstruktur (11) mechanisch mit dem Gehäuse (3) gekoppelt ist,
wobei der Bildgebungssensor (2) mechanisch von der Tragstruktur (11) entkoppelt ist.

2. Abbildungsvorrichtung (1) nach Anspruch 1, **gekennzeichnet durch** eine erste axiale Wärmeausdehnungsrichtung des Gehäuses (3) und eine zweite axiale Wärmeausdehnungsrichtung der Kompensationseinheit (10), wobei die erste axiale Richtung in einer der zweiten axialen Richtung entgegengesetzten Richtung verläuft, so dass die Wärmeausdehnung des Gehäuses (3) in der ersten axialen Richtung durch die Wärmeausdehnung der Kompensationseinheit (10) in der zweiten axialen Richtung kompensiert wird,
und/oder
**gekennzeichnet durch** die zweite axiale Richtung der thermischen Kontraktion des Gehäuses (3) und die erste axiale Richtung der thermischen Kontraktion der Kompensationseinheit (10), wobei die zweite axiale Richtung in einer der ersten axialen Richtung entgegengesetzten Richtung verläuft, so dass die thermische Kontraktion des Gehäuses (3) in der zweiten axialen Richtung durch die thermische Kontraktion der Kompensationseinheit (10) in der ersten axialen Richtung kompensiert wird.

3. Abbildungsvorrichtung (1) nach Anspruch 1 oder 2, **dadurch gekennzeichnet, dass** ein Basismaterial des Gehäuses (3) einen niedrigeren Wärmeausdehnungskoeffizienten (CTE) als das Basismaterial der Kompensationseinheit (10) umfasst.

4. Abbildungsvorrichtung (1) nach einem der vorhergehenden Ansprüche, **dadurch gekennzeichnet, dass** das Gehäuse (3) einen rohrförmigen Gehäuseabschnitt (12) umfasst, der sich in der ersten axialen Richtung erstreckt, und die Kompensationseinheit (10) einen rohrförmigen Kompensationsabschnitt (13) umfasst, der mit einem äußeren Ende am äußeren Ende des rohrförmigen Gehäuseabschnitts befestigt ist und sich in der zweiten axialen Richtung erstreckt.

5. Abbildungsvorrichtung (1) nach Anspruch 4, **dadurch gekennzeichnet, dass** die optische Anordnung (6) mit dem inneren Ende des rohrförmigen Kompensationsabschnitts (13) gekoppelt ist.

6. Abbildungsvorrichtung (1) nach einem der vorhergehenden Ansprüche, **dadurch gekennzeichnet, dass** das Trägerglas (4) durch einen mechanischen Klebstoff (7) radial an dem Gehäuse (3) befestigt ist.

7. Abbildungsvorrichtung (1) nach einem der vorhergehenden Ansprüche, **dadurch gekennzeichnet, dass** die optische Anordnung (6) eine temperaturabhängige axiale Fokusverschiebung umfasst, so dass die optische Anordnung (6) die axiale Bildposition mit Temperatur ändert, wobei die Kompensationseinheit (10) dazu eingerichtet ist, die axiale Fokusverschiebung zu kompensieren.

8. Abbildungsvorrichtung (1) nach einem der vorhergehenden Ansprüche, die eine Kette von Komponenten umfasst, die die optische Anordnung (6), die Kompensationseinheit (10), das Gehäuse (3) und den Bildgebungssensor (2) umfasst, wobei die Kette und/oder die Kompensationseinheit so ausgelegt sind, dass die axiale Bildposition in einem Temperaturbereich zwischen - 10 °C und +45 °C eine konstante Positionsbedingung erfüllt.

9. Abbildungsvorrichtung (1) nach Anspruch 8, **dadurch gekennzeichnet, dass** eine konstante Positionsbedingung dahingehend definiert ist, dass die axiale Positionsänderung weniger als 0,1 % der Brennweite der optischen Anordnung (6) und/oder weniger als 0,1 % des Abstands der optischen Anordnung (6) zum Bildgebungssensor (2) beträgt.

## Revendications

1. Appareil d'imagerie (1), comprenant :
un boîtier (3),
un capteur d'imagerie (2), le capteur d'imagerie (2) étant agencé dans le boîtier (3),
un agencement optique (6) pour projeter une image sur le capteur d'imagerie (2) dans un plan image (P), l'agencement optique (6) étant ainsi couplé au boîtier (3),
une unité de compensation (10) pour athermaliser la position axiale du plan image (P), l'unité de compensation (10) étant agencée entre le boîtier (3) et l'agencement optique (6),
**caractérisé en ce que** l'appareil d'imagerie (1) comportant un verre de support (4),
le verre de support (4) étant ainsi fixé au boîtier (3) et
le capteur d'imagerie (2) étant ainsi fixé directement au verre de support (4),
l'appareil d'imagerie (1) comportant une structure porteuse (11),
la structure porteuse (11) étant ainsi couplée mécaniquement au boîtier (3),
le capteur d'imagerie (2) étant ainsi découplé mécaniquement de la structure porteuse (11).

2. Appareil d'imagerie (1) selon la revendication 1, **caractérisé par** une première direction axiale de dilatation thermique du boîtier (3) et une seconde direction axiale de dilatation thermique de l'unité de compensation (10), la première direction axiale s'étendant dans une direction opposée à la seconde direction axiale, de sorte que la dilatation thermique du boîtier (3) dans la première direction axiale est compensée par la dilatation thermique de l'unité de compensation (10) dans la seconde direction axiale,
et/ou
**caractérisé par** la seconde direction axiale de contraction thermique du boîtier (3) et la première direction axiale de contraction thermique de l'unité de compensation (10), la seconde direction axiale s'étendant dans une direction opposée à la première direction axiale, de sorte que la contraction thermique du boîtier (3) dans la seconde direction axiale est compensée par la contraction thermique de l'unité de compensation (10) dans la première direction axiale.

3. Appareil d'imagerie (1) selon la revendication 1 ou 2, **caractérisé en ce qu'**un matériau de base du boîtier (3) présente un coefficient de dilatation thermique (CTE) inférieur à celui du matériau de base de l'unité de compensation (10).

4. Appareil d'imagerie (1) selon l'une des revendications précédentes, **caractérisé en ce que** le boîtier (3) comprend une section tubulaire de boîtier (12) s'étendant dans la première direction axiale et l'unité de compensation (10) comprend une section tubulaire de compensation (13) qui est fixée avec une extrémité extérieure à l'extrémité extérieure de la section tubulaire de boîtier et s'étendant dans la seconde direction axiale.

5. Appareil d'imagerie (1) selon la revendication 4, **caractérisé en ce que** l'agencement optique (6) est couplé à l'extrémité intérieure de la section tubulaire de compensation (13).

6. Appareil d'imagerie (1) selon l'une des revendications précédentes, **caractérisé en ce que** le verre de support (4) est fixé radialement au boîtier (3) par une colle mécanique (7).

7. Appareil d'imagerie (1) selon l'une des revendications précédentes, **caractérisé en ce que** l'agencement optique (6) comprend un décalage focal axial dépendant de la température, de sorte que l'agencement optique (6) modifie la position axiale de l'image en fonction de la température, l'unité de compensation (10) étant ainsi adaptée pour compenser le décalage focal axial.

8. Appareil d'imagerie (1) selon l'une quelconque des revendications précédentes, comprenant une chaîne de composants comprenant l'agencement optique (6), l'unité de compensation (10), le boîtier (3) et le capteur d'imagerie (2), la chaîne et/ou l'unité de compensation étant adaptées pour que la position axiale de l'image remplisse une condition de position constante dans une plage de température comprise entre -10 °C et +45 °C.

9. Appareil d'imagerie (1) selon la revendication 8, **caractérisé en ce que** la condition de position constante est définie de sorte que la variation de position axiale est inférieure à 0,1 % de la distance focale de l'agencement optique (6) et/ou inférieure à 0,1 % de la distance de l'agencement optique (6) au capteur d'imagerie (2).
